# DEMANDE DE BREVET EUROPEEN

(11) **EP 0 993 769 A1**
(43) Date de publication de la demande: **19.04.2000**
(21) Numéro de dépôt: 99402468.5
(22) Date de dépôt: 06.10.1999
(51) Int. Cl.: A01K 1/01

(54) **Dispositif de raclage à trajectoire courbe, pour l'élimination des déchets**

(30) Priorité: 13.10.1998 FR 9812971
(71) Demandeur: Sermap S.A., 25510 Pierrefontaine les Varans (FR)
(72) Inventeur: Baurand, Michel, Cabinet Ballot-Schmit, 25000 Besançon (FR); Millot, Simone, Cabinet Ballot-Schmit, 25000 Besançon (FR)
(74) Mandataire: Ballot, Paul Denis Jacques

(57) **Abrégé**

Ce dispositif de raclage comporte des moyens de guidage (80) permettant de suivre une trajectoire prédéterminée dans le couloir d'exercices (30) qui est constituée par une rainure (81) ménagée à la surface (3) de l'aire de raclage et avec laquelle coopèrent par glissement lesdits moyens de guidage (80) de forme complémentaire, caractérisé en ce que ces moyens (80) sont constitués par au moins un organe suiveur orientable ou flexible (83) apte à s'auto positionner dans la rainure (81) qui est susceptible de décrire une courbe de rayon R telle à permettre au dispositif de raclage automoteur (1) de se transférer d'un couloir d'exercices (30) vers au moins un autre couloir d'exercices réalisé selon un axe longitudinal décalé par rapport à celui du précédent, ces axes étant parallèles ou non.

## Description

La présente invention concerne un dispositif de raclage destiné à l'élimination de déchets répandus sur un sol présentant une surface régulière.

L'invention trouve une application particulièrement avantageuse dans le domaine de l'élevage animal, pour l'évacuation des fumiers ou des lisiers dans les couloirs d'exercices des étables.

On connaît de l'état de la technique deux grands types de dispositifs de raclage qui se singularisent par leur mode d'entraînement, et ceci quelle que soit la forme proprement dite du racle utilisé, c'est-à-dire droite ou en V.

Les dispositifs du premier type sont à entraînement hydraulique et utilisent un vérin pour actionner, selon un mouvement alternatif, un rail central chargé de tirer et de guider un racle le long d'un couloir d'exercices. Le racleur avance par pas au moyen d'un système à cliquet coopérant avec une série de lumières ménagées le long du rail ; son retour s'effectuant par inversion mécanique dudit cliquet.

Une telle réalisation présente cependant un inconvénient majeur puisque son installation doit de préférence être prévue dès la conception des bâtiments et des sols. A défaut, il est en effet nécessaire de casser le génie civil de l'aire de raclage, afin de ménager une rainure pour le passage du rail et d'implanter une série d'organes aptes à guider ce dernier et à l'empêcher de se soulever. Ces opérations de grande ampleur imposent par ailleurs une précision difficile à atteindre en maçonnerie courante, ainsi que le non fonctionnement prolongé de toute l'installation.

Le groupe d'entraînement chargé du déplacement du rail doit en outre se positionner nécessairement dans l'axe du couloir, c'est-à-dire généralement du côté de la fumière. Une telle disposition implique, soit la réalisation d'un support pour installer le groupe au-dessus de la fosse, soit de prévoir un génie civil pour le placer en dessous du rail. Dans les deux cas, toute intervention pour dépannage ou maintenance apparaît alors compliquée, voire dangereuse. La présence du groupe d'entraînement au-dessus de la fosse est également une gène pour la reprise du fumer à l'aide d'un tracteur à fourche par exemple.

Le second type de dispositif de raclage est quant à lui constitué par les racleurs à entraînement par chaîne. Cette dernière est montée en circuit continu autour de poulies d'angle formant pignons d'engrènement. Fixé aux deux extrémités de ladite chaîne, le racle est guidé par une rainure ménagée dans le sol. En fin de course, le dispositif de raclage vient prendre appui contre une butée à ressort. Le système détecte alors l'effort excessif exercé par le moteur et inverse le sens (course aller) ou arrête le moteur (course retour).

Tout comme la première, cette forme de réalisation nécessite des travaux de génie civil relativement conséquents afin de permettre notamment le guidage du racleur, et plus généralement la mise en place précise des différents composants (groupe d'entraînement, poulies, etc.). Elle est en outre sujette à d'importants phénomènes d'usure, avant tout au niveau de la chaîne mais également au niveau des pignons d'entraînement ; ces détériorations imposant de retendre régulièrement ladite chaîne, voire de la remplacer à plus ou moins long terme. Pour toutes ces raisons, le coût des dispositifs de raclage à entraînement par chaîne apparaît trop élevé.

Bien que relativement rustiques, ces deux types de racleurs occupent pourtant une position commercialement dominante dans un domaine où l'innovation est rare. Cependant, on a cherché récemment à éviter les problèmes engendrés par l'utilisation de tels dispositifs, et notamment les longs et onéreux travaux de génie civil ainsi que l'encombrement important des mécanismes d'entraînement. Dans cette optique, on a pensé à réaliser des dispositifs de raclage automoteurs, c'est-à-dire capables de se déplacer par leurs propres moyens.

La demanderesse a déjà proposé dans sa demande de brevet français N° 96 13846 de résoudre ce problème en décrivant un dispositif de raclage automoteur destiné à l'élimination de déchets présents à la surface d'un couloir d'exercices d'une étable, comportant des moyens moteurs aptes à entraîner en rotation au moins une roue motrice exerçant son action directement sur la surface à traiter, des moyens de guidage permettant de suivre une trajectoire déterminée dans le couloir d'exercices, ainsi que des moyens de raclage aptes à venir au contact de la surface à traiter afin de désolidariser puis de pousser les déchets lors de l'avance du dispositif de raclage, ledit dispositif de raclage présente un centre de gravité situé à proximité de l'axe de rotation de chaque roue motrice, c'est-à-dire à une distance inférieure au rayon de ladite roue motrice.

Bien que donnant indiscutablement de bons résultats, ce dispositif est néanmoins limité à un fonctionnement en ligne droite, ce qui sous entend qu'il est nécessaire de disposer d'un dispositif de raclage automoteur par couloir d'exercices, ce qui est bien entendu d'un prix de revient inacceptable, ou bien de devoir transporter ledit dispositif d'un couloir à un autre, ce qui nécessite cette fois une manutention onéreuse et désagréable quand on sait qu'il s'agit d'un milieu où les déchets à racler sont des lisiers ou des fumiers à évacuer des étables.

En effet, le dispositif décrit dans la demande N° 96 13846 ne permet qu'un déplacement rectiligne d'un moyen de guidage dans une rainure ménagée dans le sol, même si ce moyen dispose d'un certain débattement longitudinal et également transversal pour l'une de ses extrémités de manière à s'adapter, d'une part aux imperfections d'alignement des pièces constitutives de l'ensemble, et d'autre part aux défectuosités d'une rainure qui ne serait pas parfaitement rectiligne.

Aussi, le problème à résoudre par l'objet de la présente invention est de proposer un dispositif de raclage destiné à l'élimination de déchets présents à la surface d'un couloir d'exercices d'une étable, comportant des moyens d'entraînement aptes à entraîner en rotation au moins une roue exerçant son action directement sur la surface à traiter, des moyens de raclage aptes à venir au contact de la surface à traiter afin de désolidariser puis de pousser les déchets lors de l'avance du dispositif de raclage, et des moyens de guidage permettant de suivre une trajectoire prédéterminée dans le couloir d'exercices qui est constituée par une rainure ménagée à la surface de l'aire de raclage et avec laquelle coopèrent par glissement lesdits moyens de guidage de forme complémentaire fixés sous un élément support solidaire du dispositif de raclage automoteur.

Un tel dispositif permet d'éviter tous les problèmes de l'état de la technique précité en offrant notamment la possibilité d'utiliser un même dispositif pour plusieurs couloirs d'exercices et cela sans aucune manutention particulière, celui-ci pouvant aller librement et automatiquement de l'un à l'autre, sans intervention.

La solution au problème technique posé consiste donc en ce que le dispositif comporte des moyens de guidage constitués par au moins un organe suiveur orientable ou flexible apte à s'auto positionner dans la rainure qui est susceptible de décrire une courbe de rayon R telle à permettre au dispositif de raclage automoteur de se transférer d'un couloir d'exercices vers au moins un autre couloir d'exercices réalisé selon un axe longitudinal décalé par rapport à celui du précédent, ces axes étant parallèles ou non.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
- La figure 1 est une vue d'ensemble en perspective d'un dispositif de raclage automoteur selon un exemple d'application muni de moyens de guidage selon l'invention.
- La figure 2 est une vue en perspective partielle de dessous du dispositif de raclage automoteur selon la figure 1, montrant plus particulièrement les moyens de guidage en vue de dessous également.
- La figure 3 est une vue latérale des moyens de guidage selon les figures 1 et 2.
- La figure 4 est une vue de dessus selon la figure 3.
- La figure 5 est une vue en perspective des moyens de guidage selon les figures 3 et 4.
- La figure 6 est une vue en perspective éclatée des moyens de guidage selon la figure 5.
- La figure 7 est une vue en perspective éclatée des moyens de guidage selon une variante de réalisation.
- La figure 8 est une vue en coupe selon la ligne VIII.VIII de la figure 3.
- La figure 9 est une vue schématique montrant le dispositif de raclage automoteur, muni des moyens de guidage selon l'invention, en cours de fonctionnement dans une rainure courbe.

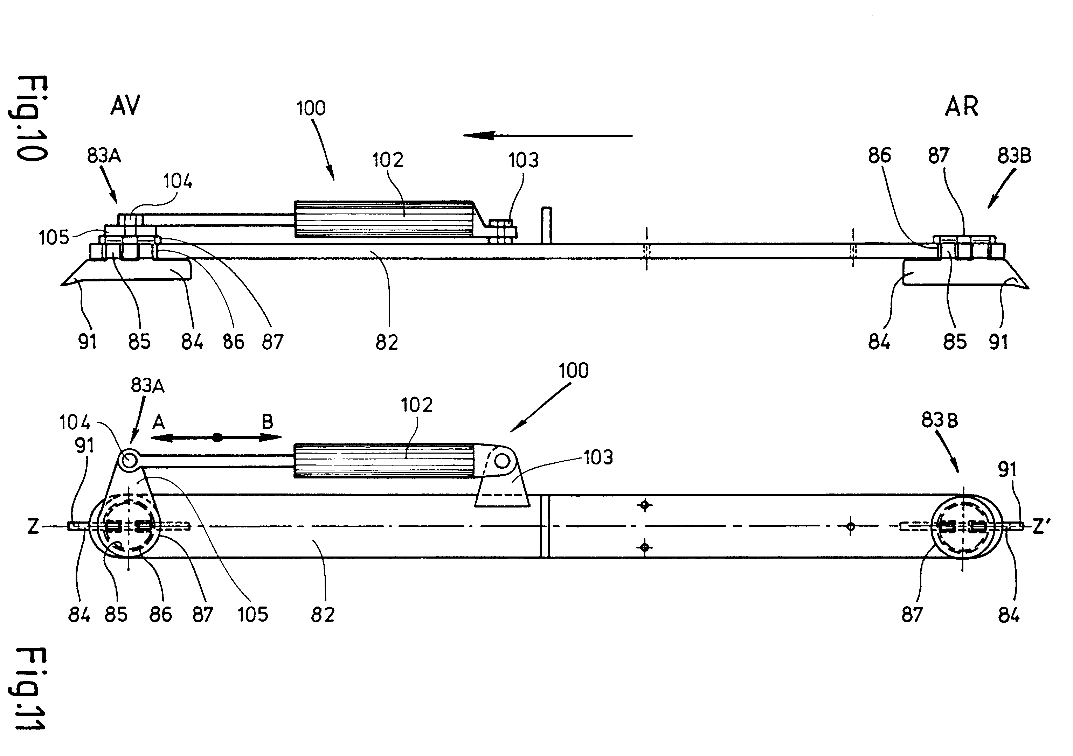

- La figure 10 est une vue latérale des moyens de guidage selon une variante de réalisation.
- La figure 11 est une vue de dessus selon la figure 10.

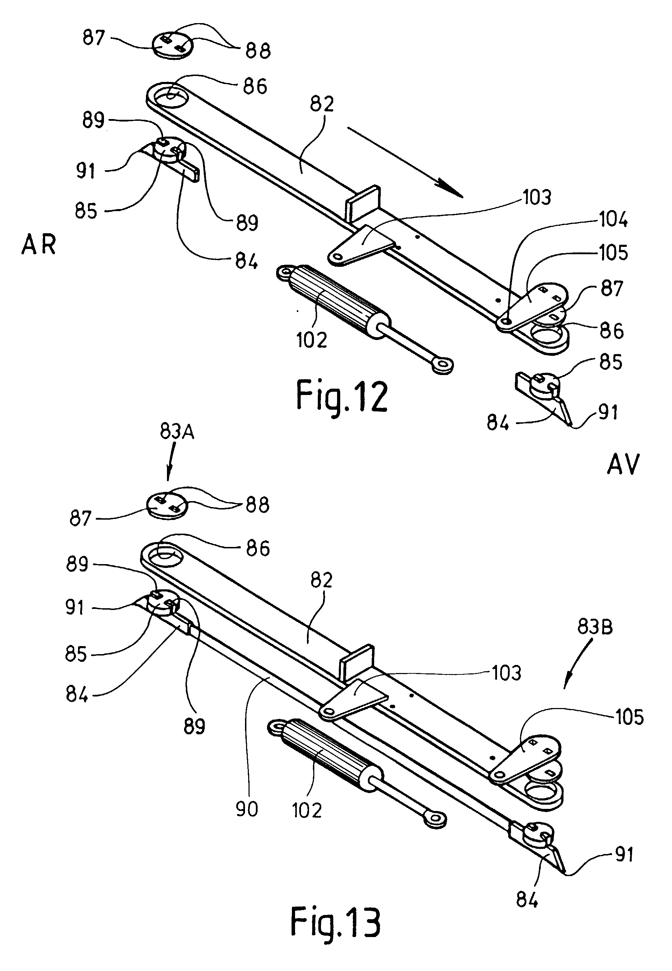

- La figure 12 est une vue en perspective éclatée selon les figures 10 et 11.
- La figure 13 est une vue en perspective éclatée selon une variante de réalisation.
- La figure 14 est une vue schématique de dessus montrant le dispositif de râclage automoteur selon une variante de réalisation.

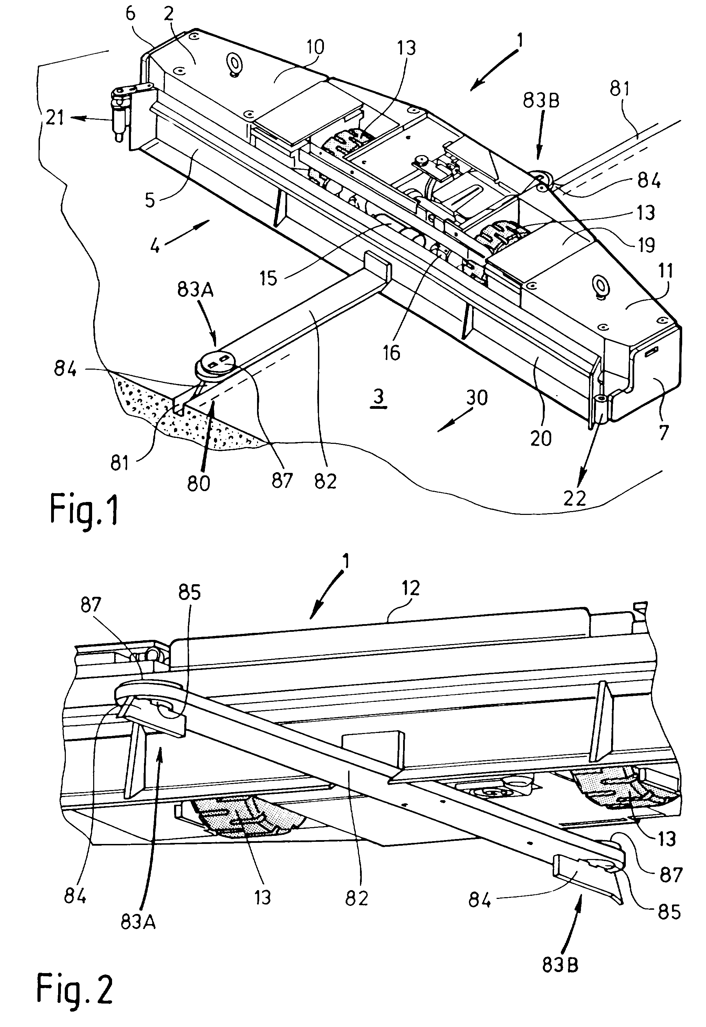

Selon un exemple d'application de l'invention, le dispositif de raclage automoteur 1 globalement désigné sur la figure 1 se présente sous la forme d'un bâti métallique 2 allongé, apte à se déplacer transversalement à la surface 3 d'un couloir d'exercices 30. Cette structure en forme de poutre comporte une face avant 4 rectiligne destinée à recevoir des moyens de raclage 5, deux bords latéraux 6, 7 de faibles longueurs et disposés parallèlement l'un par rapport à l'autre, une face arrière 8 de forme brisée délimitant schématiquement une partie centrale 9 et deux parties latérales 10, 11 symétriques, ainsi qu'un couvercle 12 rigide et basculant afin de pouvoir respectivement supporter la masse de l'utilisateur ou d'un animal et permettre toute intervention sur les composants internes du racleur 1.

La majorité des éléments mécaniques est regroupée dans la partie centrale 9 du bâti 2. On y retrouve deux roues motrices 13 à bandage caoutchouc solidarisées à un même arbre de transmission non représenté, lequel est entraîné par un moteur électrique 15 via un réducteur 16. Egalement, au centre et contre la face avant 5, un système de levage à cliquet non représenté est susceptible de relever avantageusement les moyens de raclage 5 de manière automatique lorsque le dispositif 1 est en marche arrière.

Chaque partie latérale 10, 11 est quasiment entièrement massive. Les seuls espaces disponibles étant réservés, d'une part, au passage d'une des deux roues motrices 13, et d'autre part, à l'implantation d'une batterie 19 rechargeable destinée à l'alimentation du moteur électrique 15. Bien entendu, d'autres types de moyens moteurs peuvent être utilisés pour entraîner les roues 13, étant entendu que dans tous les cas de figure, ils doivent pouvoir être alimentés par une source énergétique stockée à même le dispositif de raclage 1.

A titre d'exemple de réalisation, les moyens de raclage 5 sont constitués par une lame 20 formant racle disposée sur champ parallèlement à l'axe de rotation des roues 13. Ladite lame 20 est par ailleurs montée flottante le long de la face avant 4, c'est-à-dire mobile en translation dans un plan sensiblement vertical de manière à venir par simple gravité au contact de la surface 3 à traiter. Chacune de ses extrémités est pourvue d'un volet 21, 22 monté verticalement pivotant. Comme chacun d'entre eux est articulé librement, sa mise en place dans une position s'effectue automatiquement lors du déplacement du racleur 1.

Afin de ne pas entraîner lors de son retour, les déchets nouvellement déposés sur l'aire de raclage 3 juste après son passage aller, le racleur 1 est avantageusement doté de moyens de levage (non représentés) aptes à relever automatiquement les moyens de raclage 5 pendant toute la durée de la phase de marche arrière.

Les systèmes de guidage connus, et notamment ceux utilisant le principe du guidage central, peuvent bien évidemment être adaptés sur le dispositif de raclage 1 objet de la présente invention. Cependant, il est particulièrement avantageux de concevoir un système de guidage dont l'essentiel de l'action s'exerce systématiquement et majoritairement dans une zone située en avant de l'axe de rotation des roues motrices, et ceci quel que soit le sens de déplacement du racleur 1.

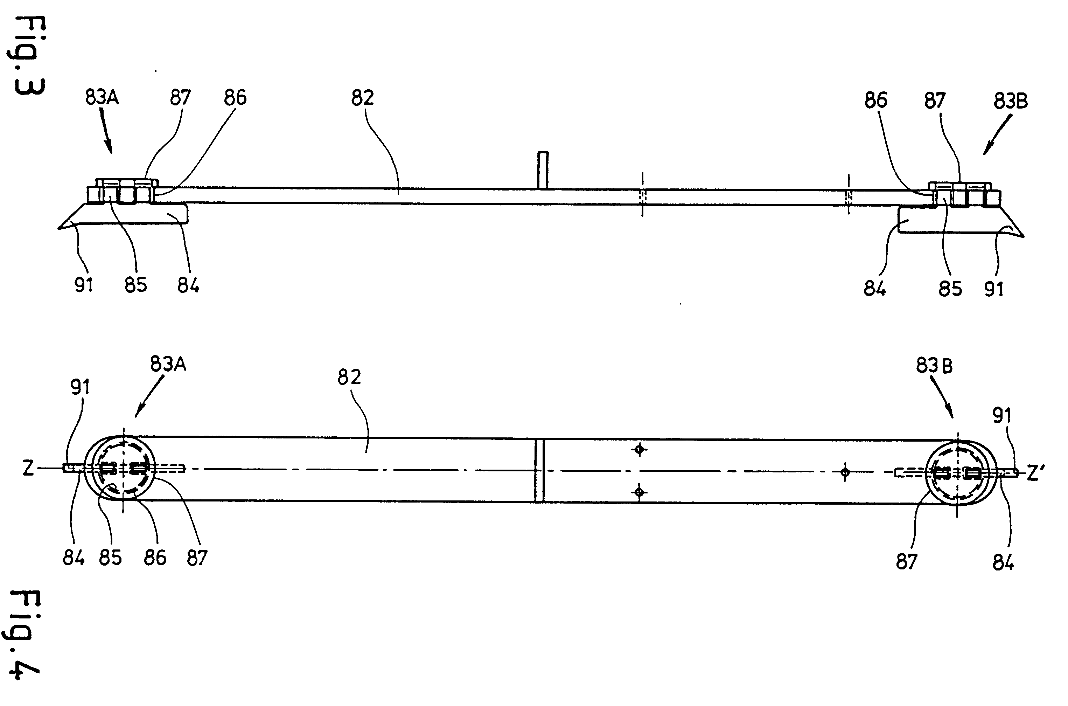

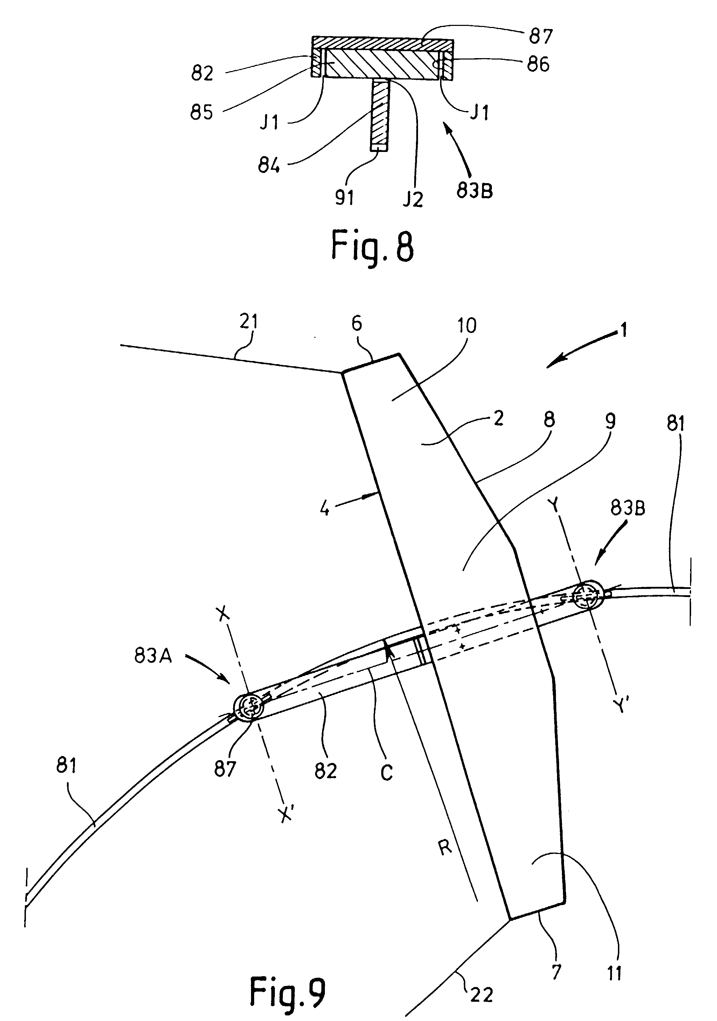

Les figures 1 à 9 illustrent un tel système, selon un mode de réalisation préféré de l'invention. Les moyens de guidage 80 permettent de suivre une trajectoire prédéterminée dans le couloir d'exercices 30 qui est constituée par une rainure 81 ménagée à la surface 3 de l'aire de raclage et avec laquelle coopèrent par glissement, lesdits moyens de guidage 80, de forme complémentaire, fixés sous un élément support 82 solidaire du dispositif de raclage automoteur 1 comme le montrent particulièrement bien les figures 1 et 2.

Selon l'invention, ces moyens 80 sont constitués par au moins un organe suiveur orientable ou flexible 83 apte à s'auto positionner dans la rainure 81 qui est susceptible de décrire une courbe de rayon R telle à permettre au dispositif de raclage automoteur 1 de se transférer d'un couloir d'exercices 30 vers au moins un autre couloir d'exercices réalisé selon un axe longitudinal décalé par rapport à celui du précédent, ces axes étant parallèles ou non.

Selon un premier exemple de réalisation représenté sur les figures 1 à 6, l'élément support comprend deux organes suiveurs 83 qui sont disposés à proximité de ses extrémités et qui sont constitués par des patins orientables angulairement. Une partie inférieure de chacun d'eux forme une portion de lame rectiligne est destinée à coopérer avec la rainure 81 et est surmontée sur son champ supérieur d'un tourillon cylindrique 85 qui lui est solidaire et qui est apte à se loger avec jeu J1, J2 dans un logement correspondant 86 réalisé auxdites extrémités de l'élément support 82 pour y tourner librement et prendre une position angulaire se déterminant automatiquement en fonction de la position d'un patin 83A considérée dans la rainure 81 à un instant t, en cours de déplacement dans celle-ci, que ce soit dans une partie courbe R ou non, et par rapport à la position de l'autre patin 83B dans ladite rainure 81 situé à l'autre extrémité du même élément support 82. La position de ce dernier 82 par rapport à la rainure 81 correspond à la corde C de sa courbure R, passant par les deux axes de rotation XX' et YY' des tourillons 85 des patins 83A, 83B.

Selon une autre caractéristique de l'invention, les tourillons 85 des patins orientables 83A, 83B sont solidarisés de l'élément support 82 avec un jeu axial J2 et transversal circulaire J1 par l'intermédiaire d'une contre plaque circulaire 87 fixée sur le tourillon 85 et d'un diamètre plus grand que ce dernier, de manière à prendre appui sur le plan supérieur de l'élément support entourant le logement cylindrique 86 dudit tourillon 85.

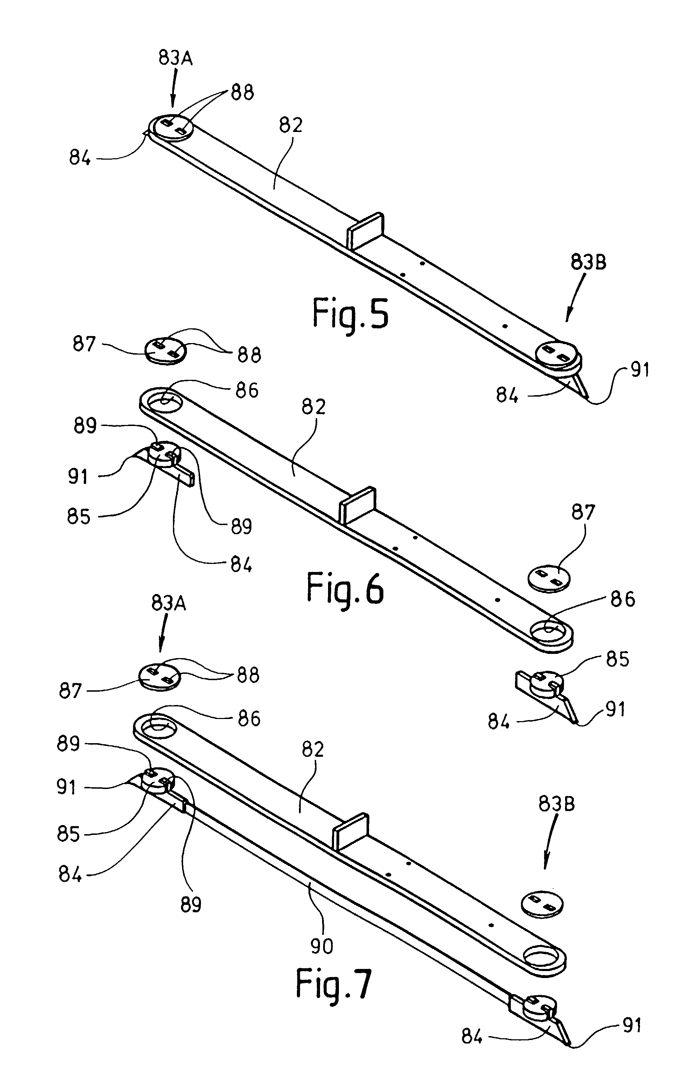

En fait, comme particulièrement bien visible sur la figure 6, la contre plaque circulaire 87 est solidarisée du tourillon 85 par soudure réalisée sur des ergots 89 du tourillon 85 qui sont préalablement engager dans des lumières 88 du couvercle 87.

Selon une autre caractéristique de l'invention, les patins orientables 83A, 83B sont ramenés automatiquement en ligne selon l'axe longitudinal ZZ' de l'élément support 82 par l'intermédiaire d'un organe de rappel élastique.

Ceci de manière à ramener en ligne lesdits patins orientables 83A, 83B même s'ils venaient à sortir de la rainure 81 afin de pouvoir s'y reloger sans intervention extérieure, lorsque le dispositif effectue une marche arrière.

Selon une variante de réalisation représentée à la figure 7, l'organe de rappel élastique est constitué par un élément plat continu et flexible 90 reliant les lames des patins orientables 83A, 83B disposés aux extrémités de l'élément support 82, ledit élément plat 90 s'étendant longitudinalement et perpendiculairement à celui-ci et étant apte à se loger avec jeu dans la rainure 81. Avantageusement, dans ce cas, l'élément plat est réalisé dans un acier à ressort apte à se conformer au rayon des courbures R de la rainure 81.

Selon une autre caractéristique de l'invention, la rainure 81 réalisée dans le sol du couloir d'exercices 30 est renforcée au moins de son côté extérieur de courbure R par un élément métallique plat (non représenté) disposé latéralement.

Selon une autre caractéristique de l'invention, les portions de lames 84 des patins orientables 83A, 83B comportent un nez d'extrémité biseauté 91 formant racleur, de manière à éviter l'encrassement de la rainure 81 dans laquelle ils évoluent.

C'est ainsi que grâce aux moyens de guidage objet de l'invention qui vient d'être décrite, le dispositif de raclage automoteur peut passer sans aucune intervention d'un couloir d'exercices à un autre couloir d'exercices réalisé parallèlement au premier. Dans ce cas, la rainure est constituée suivant deux axes parallèles reliés entre eux par un demi-cercle formant globalement un U.

Un couloir d'exercices pourra également être situé selon des axes perpendiculaires entre eux. La rainure, dans ce cas, aura une forme de L.

Des couloirs d'exercices pourront également être situés l'un devant l'autre mais de manière décalée. Dans ce cas, la rainure sera effectuée en forme de S.

Egalement, le dispositif de raclage automoteur qui vient d'être décrit à titre d'exemple pourra consister en un dispositif racleur à entraînement par chaîne.

Bien entendu, bien d'autres variantes pourront être imaginées grâce à l'invention, la rainure pouvant être de toute autre forme.

C'est ainsi que selon une variante de réalisation du dispositif de raclage, au moins l'un des organes suiveurs 83A, 83B montés rotatifs à proximité de ses extrémités avant et arrière et constitué par des patins, comporte des moyens de commande 100 lui permettant d'une part une prise d'orientation angulaire libre, lui permettant son autopositionnement dans la rainure 81 en fonction de son éventuelle courbure de rayon R et d'autre part une prise d'orientation angulaire temporairement asservie, lui permettant une prise de direction selon l'une ou l'autre des branches d'un aiguillage fixe 101 globalement en Y, situé au point de rencontre de deux rainures 81A, 81B, constituant deux trajectoires différentes.

Bien entendu, il s'agira prépérentiellement de la commande d'un patin avant.

Selon le présent exemple, l'aiguillage 101 est formé d'une rainure droite 81A et d'une rainure courbe 81B. Il pourra également s'agir de deux rainures courbes ou de deux rainures droites.

Les moyens de commande précités sont constitués par un vérin électrique 102 interposé entre un point d'ancrage fixe 103 de l'élément support 82 solidaire du dispositif de raclage 1 et un point d'ancrage mobile 104 d'une biellette 105 solidaire de l'organe suiveur rotatif ou patin 83A ou 83B, et agissant de manière rectiligne dans un sens A ou dans l'autre B pour appliquer à ce dernier un mouvement rotatif vers la droite ou vers la gauche selon la direction à prendre, par l'intermédiaire de moyens de détection 106.

Ces moyens de détection 106 sont constitués par un pion 107 fixé dans le sol en amont de l'aiguillage 101 et apte à activer un détecteur embarqué 108 en liaision électrique avec le vérin 10 pour l'actionner dans un sens A ou dans l'autre B, lorsqu'il se trouve dans une zone élargie 109 de l'aiguillage 101, permettant le changement de direction sans coincement des organes en présence.

Il est à noter que la longueur de la zone élargie 109 est inférieure à l'écartement entre deux patins 83A, 83B avant et arrière, de manière à ce que le guidage dans la rainure, au moment du passage dans l'aiguillage 101, soit toujours assuré par au moins l'un desdits patins 83A et 83B.

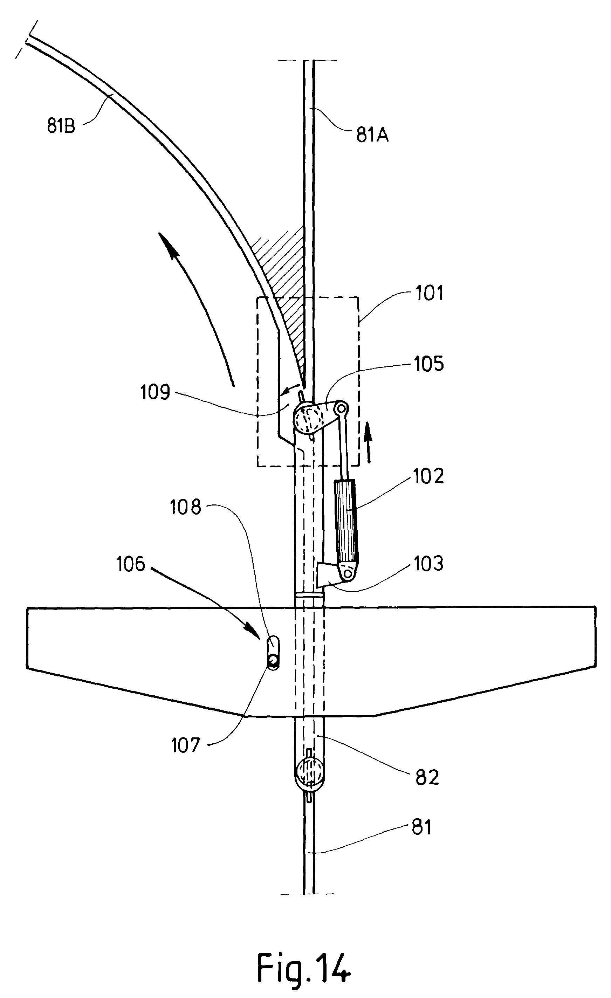

A titre d'exemple illustratif, comme représenté sur la figure 14, le racleur aborde un aiguillage à gauche. Au préalable, il a détecté qu'il s'agit bien d'un aiguillage à gauche, à l'aide du pion fixé dans le sol, actionnent alors automatiquement le vérin électrique pour orienter le patin vers la gauche dans la zone élargie 109.

En avançant le bec du patin vient s'engager dans la rainure courbe située à gauche et le racleur s'engage dans la voie de gauche. Le patin arrière reste quant à lui engagé dans la rainure droite, le temps du passage à gauche, ceci pour un meilleur guidage.

L'avantage majeur d'un tel dispositif est que l'aiguillage est fixé au sol et ne comporte aucun organe mobile comme tout aiguillage connu en général, il n'y a donc aucun organe en mouvement ni aucune alimentation électrique au sol.

En fait, la partie mobile et la commande électrique sont embarquées, l'ordre étant donné par le robot de raclage qui est constitué en fait par une partie électronique embarquée.

Il suffit donc de livrer une pièce préfabriquée constituant l'aiguillage, prête à être scellée dans le sol, donc très simple et très fiable.

## Revendications

1. Dispositif de raclage (1) destiné à l'élimination de déchets présents à la surface (3) d'un couloir d'exercices (30) d'une étable, comportant des moyens d'entraînement (2) aptes à entraîner en rotation au moins une roue (13) exerçant son action directement sur la surface (3) à traiter, des moyens de raclage (5) aptes à venir au contact de la surface (3) à traiter afin de désolidariser puis de pousser les déchets lors de l'avance du dispositif de raclage (1), et des moyens de guidage (80) permettant de suivre une trajectoire prédéterminée dans le couloir d'exercices (30) qui est constituée par une rainure (81) ménagée à la surface (3) de l'aire de raclage et avec laquelle coopèrent par glissement lesdits moyens de guidage (80) de forme complémentaire fixés sous un élément support (82) solidaire du dispositif de raclage (1), caractérisé en ce que ces moyens (80) sont constitués par au moins un organe suiveur orientable ou flexible (83) apte à s'auto positionner dans la rainure (81) qui est susceptible de décrire une courbe de rayon R telle à permettre au dispositif de raclage automoteur (1) de se transférer d'un couloir d'exercices (30) vers au moins un autre couloir d'exercices réalisé selon un axe longitudinal décalé par rapport à celui du précédent, ces axes étant parallèles ou non.

2. Dispositif de raclage (1) selon la revendication 1, caractérisé en ce que l'élément support (82) comprend deux organes suiveurs (83) qui sont disposés à proximité de ses extrémités et qui sont constitués par des patins orientables angulairement dont une partie inférieure de chacun d'eux formant une portion de lame rectiligne est destinée à coopérer avec la rainure (81) et est surmontée sur son champ supérieur d'un tourillon cylindrique (85) qui lui est solidaire et qui est apte à se loger avec jeu (J1, J2) dans un logement correspondant (86) réalisé auxdites extrémités de l'élément support (82) pour y tourner librement et prendre une position angulaire se déterminant automatiquement en fonction de la position d'un patin (83A) considérée dans la rainure (81) à un instant t, en cours de déplacement dans celle-ci, que ce soit dans une partie courbe R ou non, et par rapport à la position de l'autre patin (83B) dans ladite rainure (81) situé à l'autre extrémité du même élément support (82), la position de ce dernier (82) par rapport à la rainure (81) correspondant à la corde C de sa courbure R, passant par les deux axes de rotation (XX') et (YY') des tourillons (85) des patins (83A, 83B).

3. Dispositif de raclage (1) selon la revendication 2, caractérisé en ce que les tourillons (85) des patins orientables (83A, 83B) sont solidarisés de l'élément support (82) avec un jeu axial (J2) et transversal circulaire (J1) par l'intermédiaire d'une contre plaque circulaire (87) fixée sur le tourillon (85) et d'un diamètre plus grand que ce dernier, de manière à prendre appui sur le plan supérieur de l'élément support entourant le logement cylindrique (86) dudit tourillon (85).

4. Dispositif de raclage (1) selon la revendication 2 ou 3, caractérisé en ce que les patins orientables (83A, 83B) sont ramenés automatiquement en ligne selon l'axe longitudinal (ZZ') de l'élément support (82) par l'intermédiaire d'un organe de rappel élastique.

5. Dispositif de raclage (1) selon la revendication 4, caractérisé en ce que l'organe de rappel élastique est constitué par un élément plat continu et flexible (90) reliant les lames des patins orientables (83A, 83B) disposés aux extrémités de l'élément support (82), ledit élément plat (90) s'étendant longitudinalement et perpendiculairement à celui-ci et étant apte à se loger avec jeu dans la rainure (81).

6. Dispositif de raclage (1) selon l'une quelconque des revendications 1 à 5, caractérisé en ce que la rainure (81) réalisée dans le sol du couloir d'exercices (30) est renforcée au moins de son côté extérieur de courbure R par un élément métallique plat (non représenté) disposé latéralement.

7. Dispositif de raclage (1) selon l'une quelconque des revendications 2 à 6, caractérisé en ce que les portions de lames (84) des patins orientables (83A, 83B) comportent un nez d'extrémité biseauté (91) formant racleur de manière à éviter l'encrassement de la rainure (81) dans laquelle ils évoluent.

8. Dispositif de raclage (1) selon l'une quelconque des revendications 1 à 7, caractérisé en ce qu'au moins l'un des organes suiveurs (83A, 83B) montés rotatifs à proximité de ses extrémités avant et arrière et constitué par des patins, comporte des moyens de commande (100) lui permettant d'une part une prise d'orientation angulaire libre, lui permettant son autopositionnement dans la rainure 81 en fonction de son éventuelle courbure de rayon R et d'autre part une prise d'orientation angulaire temporairement asservie, lui permettant une prise de direction selon l'une ou l'autre des branches d'un aiguillage fixe (101) globalement en Y, situé au point de rencontre de deux rainures (81A, 81B), constituant deux trajectoires différentes.

9. Dispositif de raclage (1) selon la revendication 8, caractérisé en ce que ces moyens de commande sont constitués par un vérin électrique (102) interposé entre un point d'ancrage fixe (103) de l'élément support (82) solidaire du dispositif de raclage (1) et un point d'ancrage mobile (104) d'une biellette (105) solidaire de l'organe suiveur rotatif ou patin (83A ou 83B), et agissant de manière rectiligne dans un sens A ou dans l'autre B pour appliquer à ce dernier un mouvement rotatif vers la droite ou vers la gauche selon la direction à prendre, par l'intermédiaire de moyens de détection (106).

10. Dispositif de raclage (1) selon la revendication 9, caractérisé en ce que ces moyens de détection (106) sont constitués par un pion (107) fixé dans le sol en amont de l'aiguillage (101) et apte à activer un détecteur embarqué (108) en liaision électrique avec le vérin (102) pour l'actionner dans un sens A ou dans l'autre B, lorsqu'il se trouve dans une zone élargie (109) de l'aiguillage (101), permettant le changement de direction sans coincement des organes en présence.
